# EUROPÄISCHE PATENTSCHRIFT

(11) **EP 0 718 481 B1**
(45) Veröffentlichungstag und Bekanntmachung des Hinweises auf die Patenterteilung: **25.10.2000**
(21) Anmeldenummer: 95114998.8
(22) Anmeldetag: 23.09.1995
(51) Int. Cl.: F02B 37/013, F02B 47/08, F02M 25/07

(54) **Vorrichtung zur Abgasrückführung bei einer Brennkraftmaschine mit Aufladung**
Exhaust gas recirculation deviced in a supercharged internal combustion engine
Dispositif de recirculation des gaz d'échappement dans un moteur à combustion interne suralimenté

(30) Priorität: 24.12.1994 DE 4446730
(43) Veröffentlichungstag der Anmeldung: 26.06.1996
(73) Patentinhaber: MAN Nutzfahrzeuge Aktiengesellschaft, 80995 München (DE)
(72) Erfinder: Weiss, Joachim, Dr., D-90522 Oberasbach (DE)

(56) Entgegenhaltungen:
- DE-A- 2 326 206
- DE-A- 4 120 055
- DE-C- 4 231 218
- DE-C- 4 416 572
- US-A- 4 350 013

## Beschreibung

Die Erfindung bezieht sich auf eine Vorrichtung für eine Abgasrückführung gemäß dem Oberbegriff des Patentanspruches.

Durch DE 41 20 055 A1 ist eine Abgasrückführung an einer aufgeladenen Brennkraftmaschine bekannt, bei der abgasseitig eine zweistufige Expansion des Abgases vorgesehen ist. Zwischen einer Hoch und einer Niederdruckturbine wird Abgas entnommen und unter Zwischenschaltung eines Regelventils direkt der Ladeluftleitung zugeführt. Eine derartige Abgasrückführung hat den Nachteil, daß sie nur dann Rückführung betreiben kann, wenn ein positives Druckgefälle vorhanden ist, wenn also der Abgasdruck über dem Ladeluftdruck liegt. Folglich sind große Betriebsbereiche der Brennkraftmaschine für eine Abgasrückführung zum Zwecke der NOₓ-Reduzierung ausgeschlossen. Durch die hohe Temperatur des Abgases entsteht folglich auch eine hohe Temperatur des Abgas-Luftgemisches was natürlich durch eine Verschlechterung des Liefergrades zu einer Leistungsminderung und Brennstoffverbrauchserhöhung führt.

Nach US-PS 4 350 013 A ist es bekannt, zum Zwecke der Abgasrückführung Teile des Abgases vor einer Abgasturbine zu entnehmen und sie einem Eintritt eines Verdichters zuzuführen. Die Menge des rückgeführten Abgases kann durch ein Regelventil gesteuert werden. Eine derartige Vorrichtung hat den Nachteil, daß die Leistung der Turbine durch die Entnahme von Abgas erheblich abgesenkt wird. Gleichzeitig erhöht sich aber die für die Verdichtung notwendige Leistung, da durch das heiße Abgas die Temperatur des Abgas-Luftgemisches vor Eintritt in den Verdichter wesentlich erhöht wird. Gleichzeitig wird die zu verdichtende Gasmenge um die entsprechende Abgasmenge erhöht. Aus diesen Nachteilen ergibt sich eine Verringerung des Aufladeniveaus, eine Leistungsminderung und Verbrauchserhöhung.

Der Erfindung liegt demgegenüber die Aufgabe zugrunde, die Abgasrückführung so weiter zu entwickeln, daß sie nahezu im gesamten Betriebsbereich mit dem Ziel einer Absenkung der Stickoxidemission angewandt werden kann und dabei gleichzeitig eine geringe thermische und mechanische Belastung der Turbomaschinen bei möglichst unverändertem Gesamtwirkungsgrad gewährleistet ist.

Gelöst wird diese Aufgabe durch die Merkmale des Patentanspruches.

Durch die Entnahme des Abgases erst nach der Hochdruckturbine wird die im Abgas steckende Enthalpie besser ausgenutzt. Zum Antrieb des Hochdruckverdichters steht somit mehr Energie zur Verfügung, so daß ein nahezu unverändert hoher Ladedruck erzielt wird. Dieser Effekt wird noch dadurch verstärkt, daß die durch die Entnahme des Rückführgases hervorgerufene Absenkung des Druckniveaus zwischen Hoch- und Niederdruckturbine das Gefälle am Hochdruckteil zusätzlich vergrößert. Die aufgrund der Abgasrückführung sinkende Leistung der Niederdruckturbine wird daher zu einem beträchtlichen Teil durch eine höhere Leistung der Hochdruckturbine kompensiert. Ferner geht die erhöhte Turbinenleistung mit erhöhter Verdichtung einher, welche durch die Rückkühlung des Abgases vor Eintritt in den Niederdruckverdichter erreicht wird. Zudem wird der Verdichter vor thermischer Überlastung geschützt.

Die Kühlung des rückgeführten Abgases in einem besonderen Abgaskühler verringert die für die Aufladung des Abgas-Luftgemisches erforderliche Verdichtungsarbeit erheblich und schützt den Verdichter vor thermischer Überlastung.

Ein Ausführungsbeispiel der Erfindung ist an Hand einer Zeichnung dargestellt.

Das Abgas einer Brennkraftmaschine 1 gelangt von einer Abgassammelleitung 2 zunächst zu einer ersten Hochdruckturbine 3 eines ersten Abgasturboladers 4. Nach dem Verlassen der Hochdruckturbine 3 wird das Abgas über eine Verbindungsleitung 5 einer Niederdruckturbine 6 eines zweiten Abgasturboladers 7 zugeführt.

Erfindungsgemäß zweigt von der Verbindungsleitung 5 eine Bypaßleitung 8 ab, über welche eine Teilmenge des Abgases dem Eintritt eines Niederdruckverdichters 9 des zweiten Abgasturboladers 7 zugeführt werden kann.

Die dem Eintritt des Niederdruckverdichters 9 zugeführte Teilmenge des Abgases kann durch ein Regelventil 10 in der Bypaßleitung 8 geregelt werden. Zur Rückkühlung des rückgeführten Abgases ist ein Abgaskühler 11 vorgesehen, welcher mit dem Regelventil 10 in Reihe geschaltet ist. Die vom Regelventil 10 gesteuerte Abgasmenge wird dem Eintritt des Niederdruckverdichters 9 des zweiten Turboladers 7 zugeführt und zusammen mit der Luft vorverdichtet. Die vorverdichtete Luft bzw. das Abgas/Luftgemisch durchläuft nun einen ersten Ladeluftkühler 12 und wird anschließend in einem Hochdruckverdichter 13 des ersten Turboladers 4 weiterverdichtet. Die Luft bzw. das Abgas-/Luftgemisch wird in einem zweiten Ladeluftkühler 14 nochmals gekühlt, ehe es, nunmehr auf Ladedruckniveau, über die Ladeluftleitung 15 der Brennkraftmaschine 1 zugeführt wird.

Der wesentliche Vorteil der erfindungsgemäßen Abgasrückführung ist darin zu sehen, daß das Abgas hoher Enthalpie zunächst in der Hochdruckturbine 3 entspannt wird und dabei einen großen Teil seiner Energie abgibt, welche dem Hochdruckverdichter 13 zugute kommt. Zusätzliche Vorteile stellen sich dann ein, wenn das System eine zweiflutige Anordnung des Abgasstranges m Verbindung mit einer zweiflutig ausgebildeten Hochdruckturbine 3 aufweist, indem die damit einhergehenden Nachteile bei der Abgasentnahme aus einem Abgasstrang vermieden werden. Dasselbe gilt für die Abgasentnahme aus beiden Strängen, weil sie nicht länger getrennt wären und sich gegenseitig negativ beeinflussen würden. Aus beidem ergibt sich durch die Entnahme des Rückführgases nach der Hochdruckturbine 3 eine höhere Effizienz derselben und damit ein niedrigerer Kraftstoffverbrauch der Brennkraftmaschine. Ein weiterer positiver Aspekt ist darin zu sehen, daß bei der Auslegung der Hochdruckturbine 3 auf evtl. Beeinflussung durch die Verringerung des Massenstroms durch Abgasrückführung keine Rücksicht genommen zu werden braucht, weil die Hochdruckturbine 3 immer mit dem gesamten Abgasstrom beaufschlagt ist. Darüber hinaus hat sich die Temperatur des Abgases nach Austritt aus Turbine 3 durch Expansion beträchtlich erniedrigt, bevor es über die Bypaßleitung 8 rückgeführt wird. Dies entlastet den Abgaskühler 11 thermisch und verringert die erforderliche Kühlleistung.

Die erfindungsgemäße Abgasrückführung verhilft der Brennkraftmaschine nahezu im gesamten Betriebsbereich zu niedrigen Stickoxidemissionen, ohne den Kraftstoffverbrauch nennenswert anzuheben.

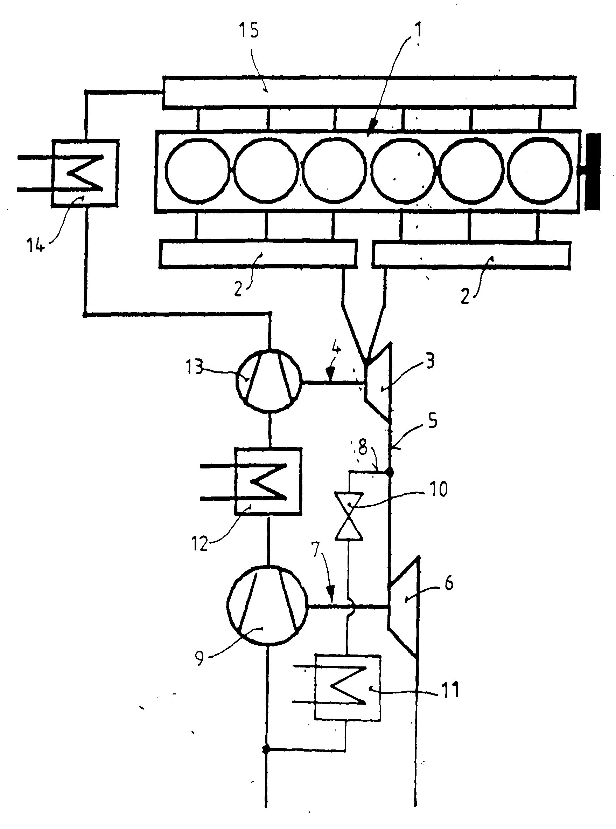

## Patentansprüche

1. Vorrichtung zur Abgasrückführung bei einer Brennkraftmaschine (1) mit Aufladung, bei der abgasseitig eine Hoch- und eine Niederdruckturbine (3, 6) und ladeluftseitig ein der Hochdruckturbine (3) zugehöriger Hochdruckverdichter (13) und ein der Niederdruckturbine (6) zugehöriger Niederdruckverdichter (9) jeweils in Reihe geschaltet vorgesehen sind und bei der eine Teilmenge des Abgases zwischen Hoch- und Niederdruckturbine (3, 6) über eine Bypaßleitung (8) entnommen und einem Eintritt eines der der Abgasturbine zugehörigen Verdichter zugeführt wird, wobei die entnommene Teilmenge des Abgases über ein in die Bypaßleitung (8) eingebautes Regelventil (10) steuerbar ist, dadurch gekennzeichnet, daß die Bypaßleitung (8) die Teilmenge des Abgases dem Eintritt des Niederdruckverdichters (9) zuführt, und daß die Bypaßleitung (8) einen zum Regelventil (10) in Reihe geschalteten Abgaskühler (11) aufweist.

## Claims

1. Device for exhaust-gas recirculation in a supercharged internal combustion engine (1), which device is provided at the exhaust-gas end with a high-pressure turbine (3) a low-pressure turbine (6) and, at the charge-air end, with a high-pressure compressor (13) associated with the high-pressure turbine (3) and with a low-pressure compressor (9) associated with the low-pressure turbine (6), each compressor being connected in series, and in which device a partial quantity of the exhaust gas is diverted between the high and low-pressure turbines (3, 6) via a bypass line (8) and supplied to an inlet of one of the compressors associated with the exhaust-gas turbine, the partial exhaust-gas quantity diverted being controllable via a control valve (10) built into the bypass line (8), characterised in that the bypass line (8) supplies the partial exhaust-gas quantity to the inlet of the low-pressure compressor (9) and that the bypass line (8) is equipped with an exhaust-gas cooler (11) connected in series to the control valve (10).

## Revendications

1. Dispositif pour réinjecter les gaz d'échappement dans un moteur à combustion interne (1) suralimenté, selon lequel, du côté des gaz d'échappement, il est prévu une turbine haute pression et une turbine basse pression (3, 6) et du côté de l'air d'alimentation, un compresseur haute pression (13) faisant partie de la turbine haute pression (3) et un compresseur basse pression (9) faisant partie de la turbine basse pression (6), chaque fois branché en série, et
une partie des gaz d'échappement est prise entre la turbine haute pression et la turbine basse pression (3, 6), par une conduite de dérivation (8), et est fournie à l'entrée d'un compresseur faisant partie de la turbine des gaz d'échappement,
la fraction de gaz d'échappement ainsi prélevée est commandée par une vanne de régulation (10) intégrée à la conduite de dérivation (8),
caractérisé en ce que
- la conduite de dérivation (8) reçoit la fraction de gaz d'échappement à l'entrée dans le compresseur basse pression (9) et
- la conduite de dérivation (8) présente un radiateur de refroidissement des gaz d'échappement (11) branché en série à la vanne de régulation (10).
